# EUROPEAN PATENT SPECIFICATION

(11) **EP 2 335 924 B1**
(45) Date of publication and mention of the grant of the patent: **12.02.2014**
(21) Application number: 09818924.4
(22) Date of filing: 28.09.2009
(51) Int. Cl.: B32B 27/36, B32B 27/30, B32B 27/40, G02B 5/02

(54) **MULTILAYER POLYESTER FILM**
MEHRSCHICHTIGER POLYESTERFILM
FILM POLYESTER MULTICOUCHE

(30) Priority: 06.10.2008 JP 2008259735; 06.10.2008 JP 2008259736; 06.10.2008 JP 2008259737
(43) Date of publication of application: 22.06.2011
(73) Proprietor: Mitsubishi Plastics, Inc., Tokyo 103-0021 (JP)
(72) Inventor: KAWASAKI, Taishi, Maibara-shi Shiga 521-0234 (JP); KODA, Toshihiro, Maibara-shi Shiga 521-0234 (JP); FUJITA, Masato, Maibara-shi Shiga 521-0234 (JP)
(74) Representative: Merkle, Gebhard
(86) International application number: PCT/JP2009/004913
(87) International publication number: WO 2010/041384

(56) References cited:
- WO-A1-2011/135985
- JP-A- 2 158 633
- JP-A- 8 011 273
- JP-A- 8 311 221
- JP-A- 10 160 914
- JP-A- 11 286 092
- JP-A- 62 204 940
- US-A1- 2004 229 059
- US-A1- 2004 247 837
- US-A1- 2004 265 602

## Description

### TECHNICAL FIELD

The present invention relates to a laminated polyester film, and more particularly, to a laminated polyester film which is suitably used as a member for prism sheets used in a backlight unit of liquid crystal displays, etc., and has a good adhesion property to various functional layers.

### BACKGROUND ART

In recent years, liquid crystal displays have been extensively used as a display device for TVs, personal computers, digital cameras, cellular phones, etc. Since the liquid crystal display units have no light-emitting function by themselves, those liquid crystal displays of such a type in which light is irradiated from a backside thereof using a backlight have now come to dominate.

As the backlight type liquid crystal displays, there are known those having a so-called edge light type structure or a so-called direct backlight type structure. With the recent tendency toward reduction in thickness of liquid crystal displays, the edge light type liquid crystal displays have been more frequently employed. The edge light type liquid crystal displays are generally constructed from a reflection sheet, a light guide plate, a light diffusion sheet and a prism sheet which are successively laminated in this order. The flow of light through such edge light type liquid crystal displays is designed such that the light entered from the backlight into the light guide plate is reflected on the reflection sheet and then emitted from the surface of the light guide plate. The light emitted from the light guide plate is entered into the light diffusion sheet, diffused therein and then emitted therefrom. The light emitted from the light diffusion sheet is then entered into the prism sheet disposed next to the light diffusion sheet. In the prism sheet, the light entered thereinto is converged in the normal direction and emitted therefrom toward the liquid crystal layer.

The prism sheet used in the above construction serves for improving an optical efficiency of the backlight and enhancing a brightness thereof. As a transparent base film for the prism sheet, there has been generally used a polyester film in view of a transparency and mechanical properties thereof. In general, an easy-bonding coating layer may be further provided as an intermediate layer between the polyester film as the base material and the prism layer in order to enhance adhesion therebetween. It is known that the easy-bonding coating layer is formed of, for example, a polyester resin, an acrylic resin or a urethane resin (Patent Documents 1 to 3).

The prism layer may be produced, for example, by the following method. In the method, an active energy ray-curable coating material is charged into a mold for a prism sheet, and then a polyester film is placed on the coating material thus charged into the mold so as to interpose the coating material between the polyester film and the mold. Next, an active energy ray is irradiated to the active energy ray-curable coating material to cure the resin, and then the mold is removed from the cured resin, thereby obtaining the prism layer formed on the polyester film. In such a method, in order to form an accurate prism pattern on the prism layer, it is required to use a solvent-free type active energy ray-curable coating material. However, the solvent-free type coating material tends to be deteriorated in penetration into an easy-bonding layer laminated on the polyester film and swelling effect therein as compared to a solvent type coating material and, therefore, tends to be insufficient in adhesion thereto. In order to improve the adhesion property, a coating layer comprising a specific urethane resin has been proposed. However, even such a coating layer may still fail to exhibit a sufficient adhesion property to the solvent-free type coating material (Patent Document 4).

Also, in some cases, an anti-sticking layer may be formed on a surface of the polyester film which is opposed to its surface provided with the prism layer in order to prevent occurrence of various inconveniences owing to sticking (partial adhesion) between the polyester film and a light diffusion sheet or a liquid crystal panel. Further, in order to comply with the recent demand for reduction in thickness of various displays or reduction in costs, there has been proposed the method in which a sheet having combined functions as a prism sheet and a light diffusion sheet is produced by forming a prism layer on one surface of a polyester film and a light diffusion layer on the other surface of the polyester film (Patent Document 5).

The light diffusion sheet used in the above construction serves for uniformly diffusing the light transmitted therethrough in multiple directions, and is required to have a large light diffusion property and a high light transmittance. As the light diffusion sheet, there are known those light diffusion sheets having an irregular sheet surface, i.e., a so-called embossed surface which is formed by subjecting the sheet to heating and pressing treatments in a finishing step, and those light diffusion sheets in which a light diffusion layer formed from a transparent resin containing particles is coated on a transparent base film (Patent Documents 6 and 7).
Patent Document 1: Japanese Patent Application Laid-Open (KOKAI) No. 8-281890(1996)
Patent Document 2: Japanese Patent Application Laid-Open (KOKAI) No. 11-286092(1999)
Patent Document 3: Japanese Patent Application Laid-Open (KOKAI) No. 2000-229395
Patent Document 4: Japanese Patent Application Laid-Open (KOKAI) No. 2-158633(1990)
Patent Document 5: Japanese Patent Application Laid-Open (KOKAI) No. 10-160914(1998)
Patent Document 6: Japanese Patent Application Laid-Open (KOKAI) No. 2004-4598
Patent Document 7: Japanese Patent Application Laid-Open (KOKAI) No. 2007-286166

### SUMMARY OF THE INVENTION

### Problems to be Solved by the Invention

The present invention has been accomplished to solve the above conventional problems. An object of the present invention is to provide a laminated polyester film having a good adhesion property which makes the film flexibly applicable to various layer structures, and can be suitably used, for example, as a member for prism sheets employed in a backlight unit for liquid crystal displays, etc.

### Means for Solving Problems

As a result of the present inventors' earnest study in view of the above problems, it has been found that these problems can be readily solved by using a laminated polyester film having a specific structure. The present invention has been attained on the basis of this finding.

That is, in accordance with the present invention, there is provided a laminated polyester film which comprises a polyester film, a coating layer formed on one surface of the polyester film which comprises a urethane resin having a polycarbonate structure, and a coating layer formed on the other surface of the polyester film which comprises an acrylic resin or a urethane resin.

The present invention is described in more detail below.

The polyester film constituting the laminated polyester film of the present invention may have either a single layer structure or a multilayer structure. Unless departing from the scope of the present invention, the polyester film may have not only a two or three layer structure but also a four or more multilayer structure, and the layer structure of the polyester film is not particularly limited.

The polyester used in the present invention may be either a homopolyester or a copolyester. The homopolyester is preferably obtained by polycondensing an aromatic dicarboxylic acid and an aliphatic glycol. Examples of the aromatic dicarboxylic acid include terephthalic acid and 2,6-naphthalenedicarboxylic acid. Examples of the aliphatic glycol include ethylene glycol, diethylene glycol and 1,4-cyclohexanedimethanol. Typical examples of the polyesters include polyethylene terephthalate or the like. On the other hand, as a dicarboxylic acid component of the copolyester, there may be mentioned isophthalic acid, phthalic acid, terephthalic acid, 2,6-naphthalenedicarboxylic acid, adipic acid, sebacic acid and oxycarboxylic acids (such as, for example, p-oxybenzoic acid), or the like. As a glycol component of the polyester, there may be mentioned ethylene glycol, diethylene glycol, propylene glycol, butanediol, 4-cyclohexanedimethanol, neopentyl glycol or the like.

For the main purposes of imparting an easy-slipping property to the film and preventing occurrence of flaws in the film, particles are preferably blended in the polyester layer in the film of the present invention. The kind of particles to be blended in the polyester layer is not particularly limited, and any particles may be used as long as the particles are capable of imparting a good easy-slipping property to the film. Specific examples of the particles include particles of silica, calcium carbonate, magnesium carbonate, barium carbonate, calcium sulfate, calcium phosphate, magnesium phosphate, kaolin, aluminum oxide, titanium oxide, etc. In addition, there may also be used heat-resistant organic particles as described in Japanese Patent Publication (KOKOKU) No. 59-5216(1984), Japanese Patent Application Laid-Open (KOKAI) No. 59-217755(1984) or the like. Examples of the other heat-resistant organic particles include particles of thermosetting urea resins, thermosetting phenol resins, thermosetting epoxy resins, benzoguanamine resins, etc. Further, there may also be used deposited particles obtained by precipitating and finely dispersing a part of metal compounds such as a catalyst during the process for production of the polyester.

On the other hand, the shape of the particles used in the polyester layer is also not particularly limited, and may be any of a spherical shape, a massive shape, a bar shape, a flat shape, etc. Further, the hardness, specific gravity, color and the like of the particles are also not particularly limited. These particles may be used in combination of any two or more kinds thereof, if required.

The average particle diameter of the particles used in the polyester layer is usually in the range of 0.01 to 3 µm and preferably 0.1 to 2 µm. When the average particle diameter of the particles is less than 0.01 µm, the particles may fail to impart an easy-slipping property to the polyester layer, or tend to be aggregated together and therefore exhibit a poor dispersibility therein, which will cause deterioration in transparency of the resulting film. On the other hand, when the average particle diameter of the particles is more than 3 µm, the obtained film tends to have an excessively coarse surface roughness, thereby causing problems in the subsequent steps upon forming a functional layer such as a prism layer and a light diffusion layer on the polyester layer.

The content of the particles in the polyester layer is usually in the range of 0.001 to 5% by weight and preferably 0.005 to 3% by weight. When the content of the particles in the polyester layer is less than 0.001% by weight, the resulting film tends to be insufficient in easy-slipping property. On the other hand, when the content of the particles in the polyester layer is more than 5% by weight, the resulting film tends to be insufficient in transparency.

The method of adding the particles to the polyester layer is not particularly limited, and any conventionally known methods can be suitably used therefor. For example, the particles may be added at any optional stages in the process for production of the polyester forming the respective layers. The particles are preferably added to the polyester after completion of the esterification reaction or transesterification reaction.

In addition, there may also be used the method of blending a slurry of the particles prepared by dispersing the particles in ethylene glycol or water with the raw polyester material using a vented kneading extruder, the method of blending the dried particles with the raw polyester material using a kneading extruder, or the like.

Meanwhile, the polyester film used in the present invention may also comprise, in addition to the above particles, known additives such as an antioxidant, an antistatic agent, a thermal stabilizer, a lubricant, a dye, a pigment, etc., if required.

The thickness of the polyester film used in the present invention is not particularly limited, and the polyester film may have any thickness as long as it can maintain a suitable film shape. The thickness of the polyester film is usually in the range of 10 to 350 µm and preferably 50 to 250 µm.

Next, an example of the process of producing the polyester film used in the present invention is more specifically explained, although not particularly limited thereto. That is, in the production process, there is preferably used such a method in which the above-mentioned raw polyester material is extruded from a die in the form of a molten sheet, and the molten sheet is cooled and solidified on a cooling roll to obtain an unstretched sheet. In this case, in order to enhance a flatness of the obtained sheet, it is preferred to enhance adhesion between the sheet and the rotary cooling drum. For this purpose, an electrostatic adhesion method and/or a liquid coating adhesion method are preferably used. Next, the thus obtained unstretched sheet is biaxially stretched. In such a case, the unstretched sheet is first stretched in one direction thereof using a roll-type or tenter-type stretching machine. The stretching temperature is usually 70 to 120°C and preferably 80 to 110°C, and the stretch ratio is usually 2.5 to 7 times and preferably 3.0 to 6 times. Next, the thus stretched film is stretched in the direction perpendicular to the stretching direction of the first stage. In this case, the stretching temperature is usually 70 to 170°C, and the stretch ratio is usually 3.0 to 7 times and preferably 3.5 to 6 times. Successively, the resulting biaxially stretched sheet is heat-treated at a temperature of 180 to 270°C under a tension or relaxation within 30% to obtain a biaxially oriented film. Upon the above stretching steps, there may also be used the method in which the stretching in each direction is carried out in two or more stages. In such a case, the multi-stage stretching is preferably performed such that the stretch ratio in each of the two directions is finally fallen within the above-specified range.

Also, upon producing the polyester film constituting the laminated polyester film according to the present invention, there may also be used a simultaneous biaxial stretching method. The simultaneous biaxial stretching method is such a method in which the above unstretched sheet is stretched and oriented in both of the machine and width directions at the same time while maintaining the sheet in a suitable temperature-controlled condition at a temperature of usually 70 to 120°C and preferably 80 to 110°C. The stretch ratio used in the simultaneous biaxial stretching method is 4 to 50 times, preferably 7 to 35 times and more preferably 10 to 25 times in terms of an area ratio of the sheet to be stretched. Successively, the obtained biaxially stretched sheet is heat-treated at a temperature of 170 to 250°C under a tension or relaxation within 30% to obtain a stretched oriented film. As the apparatus used in the above simultaneous biaxial stretching method, there may be employed those stretching apparatuses of any conventionally known type such as a screw type stretching apparatus, a pantograph type stretching apparatus and a linear drive type stretching apparatus.

Next, the method of forming the coating layer constituting the laminated polyester film according to the present invention is explained. The coating layer may be formed either by an in-line coating method in which the surface of the polyester film is subjected to coating treatment during the stretching step of the polyester film, by an off-line coating method in which the polyester film produced is once transferred to an outside of the film production system and subjected to coating treatment, or by combination of these methods. Among these methods, the in-line coating method is preferably used because the coating layer can be produced simultaneously with formation of the polyester film and therefore at low costs, and the thickness of the coating layer can be varied by controlling a stretch ratio of the polyester film.

For example, in the case of a sequential biaxial stretching, the in-line coating treatment may be carried out, in particular, after completion of the longitudinal stretching but before initiation of the lateral stretching, although not particularly limited thereto. When the coating layer is formed on the polyester film by the in-line coating method, the coating can be carried out simultaneously with formation of the polyester film, and the coating layer can be treated at a high temperature. As a result, it is possible to produce a film suitable as the polyester film used in the present invention.

In the present invention, it is essentially required that a coating layer comprising a urethane resin having a polycarbonate structure (hereinafter occasionally referred to merely as a "first coating layer") is formed on one surface of the polyester film, and a coating layer comprising an acrylic resin or an urethane resin (hereinafter occasionally referred to merely as a "second coating layer") is formed on the other surfaces of the polyester film.

The first coating layer used in the present invention is preferably a coating layer capable of enhancing adhesion to, in particular, a solvent-free active energy ray curable layer. On the first coating layer, there may be formed, for example, a prism layer or a micro-lens layer.

In the present invention, the urethane resin having a polycarbonate structure which is contained in the first coating layer means such a urethane resin as produced by using a polycarbonate-based compound as one of polyols as a main constitutional component of the urethane resin. The polycarbonate-based polyols may be obtained by subjecting a polyhydric alcohol and a carbonate compound to dealcoholization reaction. Examples of the polyhydric alcohol include ethylene glycol, 1,2-propylene glycol, 1,3-propylene glycol, 1,2-butanediol, 1,3-butanediol, 1,4-butanediol, 1,5-pentanediol, 1,6-hexanediol, 1,4-cyclohexanediol, 1,4-cyclohexane dimethanol, 1,7-heptanediol, 1,8-octanediol, 1,9-nonanediol, 1,10-decanediol, neopentyl glycol, 3-methyl-1,5-pentanediol and 3,3-dimethylol heptane. Examples of the carbonate compound include dimethyl carbonate, diethyl carbonate, diphenyl carbonate and ethylene carbonate. Examples of the polycarbonate-based polyols obtained by the reaction between the above compounds include poly(1,6-hexylene)carbonate and poly(3-methyl-1,5-pentylene)carbonate.

Examples of a polyisocyanate compound used for producing the urethane resin include aromatic diisocyanates such as tolylene diisocyanate, xylylene diisocyanate, methylene diphenyl diisocyanate, phenylene diisocyanate, naphthalene diisocyanate and tolidine diisocyanate; aromatic ring-containing aliphatic diisocyanates such as α,α,α',α'-tetramethyl xylylene diisocyanate; aliphatic diisocyanates such as methylene diisocyanate, propylene diisocyanate, lysine diisocyanate, trimethyl hexamethylene diisocyanate and hexamethylene diisocyanate; and alicyclic diisocyanates such as cyclohexane diisocyanate, methyl cyclohexane diisocyanate, isophorone diisocyanate, dicyclohexylmethane diisocyanate and isopropylidene dicyclohexyl diisocyanate. These polyisocyanate compounds may be used alone or in combination of any two or more thereof.

In addition, polyols other than the polycarbonate-based polyols may also be used unless the aimed objects of the present invention are adversely affected. Examples of the polyols other than the polycarbonate-based polyols include polyether polyols, polyester polyols, polyolefin polyols and acrylic polyols. These polyol compounds may be used alone or in combination of any two or more thereof.

When the urethane resin is synthesized, there may be used a chain extender. The chain extender is not particularly limited, and any chain extender may be used as long as it has two or more active groups capable of reacting with an isocyanate group. In general, there may be mainly used such a chain extender having two hydroxyl groups or two amino group.

Examples of the chain extender having two hydroxyl groups include glycols, e.g., aliphatic glycols such as ethylene glycol, propylene glycol and butanediol; aromatic glycols such as xylylene glycol and bishydroxyethoxybenzene; and ester glycols such as neopentyl glycol hydroxypivalate. Examples of the chain extender having two amino groups include aromatic diamines such as tolylenediamine, xylylenediamine and diphenylmethanediamine; aliphatic diamines such as ethylenediamine, propylenediamine, hexanediamine, 2,2-dimethyl-1,3-propanediamine, 2-methyl-1,5-pentanediamine, trimethyl hexanediamine, 2-butyl-2-ethyl-1,5-pentanediamine, 1,8-octanediamine, 1,9-nonanediamine and 1,10-decanediamine; and alicyclic diamines such as 1-amino-3-aminomethyl-3,5,5-trimethyl cyclohexane, dicyclohexylmethanediamine, isopropylidenecyclohexyl-4,4'-diamine, 1,4-diaminocyclohexane and 1,3-bisaminomethyl cyclohexane.

The urethane resin comprising the polycarbonate as its constitutional component as used in the present invention may be dispersed or dissolved in a solvent as a medium, and is preferably dispersed or dissolved in water as the medium. In order to disperse or dissolve the urethane resin in water, there may be used those urethane resins of a forcibly emulsifiable type which can be dispersed and dissolved using an emulsifier, or those urethane resins of a self-emulsifiable type or a water-soluble type which are obtained by introducing a hydrophilic group into urethane resins, etc. Among these urethane resins, in particular, self-emulsifiable type urethane resins which are ionomerized by introducing an ionic group into a skeleton of urethane resins are preferred because they are excellent in storage stability of the coating solution as well as water resistance, transparency and adhesion property of the resulting coating layer. Examples of the ionic group to be introduced into the urethane resins include various groups such as a carboxyl group, a sulfonic acid group, a phosphoric acid group, a phosphonic acid group and a quaternary ammonium salt group. Among these ionic groups, preferred is a carboxyl group. As the method of introducing a carboxyl group into the urethane resin, there may be used various methods which may be carried out in respective stages of the polymerization reaction. For example, there may be used the method in which a carboxyl group-containing resin is used as a comonomer component upon synthesis of a prepolymer, or the method in which a carboxyl group-containing component is used as one component of the polyol, the polyisocyanate, the chain extender and the like. In particular, there is preferably used the method in which a carboxyl group-containing diol is used to introduce a desired amount of a carboxyl group into the urethane resins by suitably adjusting an amount of the diol charged. For example, the diol used in the polymerization for production of the urethane resin may be copolymerized with dimethylol propionic acid, dimethylol butanoic acid, bis-(2-hydroxyethyl)propionic acid, bis-(2-hydroxyethyl)butanoic acid, etc. In addition, the carboxyl group thus introduced is preferably formed into a salt thereof by neutralizing the carboxyl group with ammonia, amines, alkali metals, inorganic alkalis, etc. Among these compounds used for the neutralization, especially preferred are ammonia, trimethylamine and triethylamine. When using such a polyurethane resin, the carboxyl group thereof from which the neutralizing agent is removed in the drying step after the coating step may be used as a crosslinking reaction site which can be reacted with other crosslinking agents. As a result, the above-described urethane resin is excellent in stability when preserved in the form of a solution before being coated, and further the coating layer obtained therefrom can be further improved in durability, solvent resistance, water resistance, anti-blocking property, etc.

In particular, as the urethane resin preferably used in the present invention, there may be mentioned resins constituted from a polycarbonate polyol, a polyisocyanate and a compound comprising a group capable of reacting with a chain extender having a reactive hydrogen atom and an isocyanate group, and at least one anionic group. The content of the anionic group in the urethane resin is preferably 0.05 to 8% by weight. When the anionic group content is too small, the resulting urethane resin tends to be deteriorated in water solubility or water dispersibility. When the anionic group content is too large, the coating layer obtained after the coating step tends to be deteriorated in water resistance, or may absorb a moisture therein, so that the obtained films tend to be stuck to each other.

The content of the polycarbonate component in the urethane resin is usually 10 to 90% by weight and preferably 20 to 70% by weight. When the content of the polycarbonate component is less than 10% by weight, the resulting urethane resin tends to exhibit a poor adhesion-improving effect. When the content of the polycarbonate component is more than 90% by weight, the resulting urethane resin tends to be deteriorated in coatability.

Meanwhile, the urethane resin used in the present invention preferably has a glass transition point (hereinafter occasionally referred to merely as "Tg") of not higher than 10°C. When Tg is higher than 10°C, the urethane resin tends to be insufficient in easy-bonding property. The Tg as used herein means the temperature at which a dynamic viscoelasticity E" becomes maximum as measured with respect to a dried coating film formed of the urethane resin.

The laminated polyester film including the coating layer comprising the urethane resin having such a low Tg as described above tends to suffer from so-called blocking which is such a phenomenon that front and rear surfaces of the film are stuck and attached together when the laminated film is wound into a roll. In order to prevent occurrence of the blocking of the film, there may be ordinarily used the method in which a crosslinking agent is used as a constitutional component of the coating layer in combination with the urethane resin. However, when using the method of preventing occurrence of blocking by adding the crosslinking agent to the coating layer, care should be taken because the effect of improving an easy-bonding property of the resulting film as aimed by the present invention might be inhibited by the addition of the crosslinking agent.

Further, as the urethane resin having a polycarbonate structure which is used in the first coating layer according to the present invention may be in the form of a compound having a double bond. The double bond serves for enhancing adhesion of the first coating layer to a layer formed on the first coating layer. In the case where the layer formed on the first coating layer is a curable resin layer obtained by radical reaction of a double bond, the resin can also be reacted with a double bond being present in the first coating layer, so that adhesion between both the layers can be more strengthened. In this case, portions strongly bonded to each other through a carbon-to-carbon bond are formed between the first coating layer and the layer formed thereon, so that adhesion between the layers can be effectively improved even when the glass transition point of the urethane resin having a polycarbonate structure is not low.

When introducing the double bond into the urethane resin having a polycarbonate structure, a vinyl group is preferably introduced thereinto in view of radical reactivity thereof. The vinyl group may be introduced into the urethane resin by various methods in the respective steps for production of the urethane resin. For example, there may be used the method in which a resin having a vinyl group is used as a comonomer component upon synthesis of a prepolymer of the urethane resin, or the method in which a vinyl group-containing diol, diamine or amino alcohol, etc., is used, if required, in the respective steps of the polymerization. More specifically, a vinyl ether compound such as 2-hydroxyethyl vinyl ether, diethylene glycol monovinyl ether and 4-hydroxybutyl vinyl ether may be previously copolymerized with a part of comonomer components.

The content of the vinyl group in the urethane resin is not particularly limited, and the vinyl group may be introduced into the urethane resin, for example, in an amount of not less than 1 mol per 100 mol of a urethane bond in the urethane resin. When it is intended to further enhance an adhesion property of the coating layer, the vinyl group may be used in an amount of not less than 5 mol. The upper limit of the amount of the vinyl group introduced is not particularly limited. However, even if an excess amount of the vinyl group is introduced, no further effect is attained by introduction of the vinyl group, and rather the resulting urethane resin tends to be deteriorated in mechanical properties. Therefore, the content of the vinyl group in the urethane resin is preferably not more than 50 mol and more preferably not more than 25 mol.

The first coating layer in the film of the present invention preferably comprises a crosslinking agent for the purposes of increasing a coating film strength of the obtained coating layer and enhancing a wet heat resistance, etc., of the film after forming a prism layer on the coating layer. Examples of the crosslinking agent include oxazoline compounds, melamine compounds, epoxy compounds, isocyanate compounds and carbodiimide compounds, as well as so-called polymer-type crosslinking agents obtained by copolymerizing the above crosslinkable functional group with the other polymer skeleton. In the most preferred embodiment of the present invention, the urethane resin comprising a carboxyl group is used in combination with an oxazoline compound as the crosslinking agent.

Also, the laminated polyester film including the coating layer comprising the urethane resin having such a low Tg as described above tends to suffer from so-called blocking which is such a phenomenon that front and rear surfaces of the film are stuck and attached together when the laminated film is wound into a roll. In order to prevent occurrence of the blocking of the film, the coating layer preferably comprises particles as a constitutional component of the coating layer. The content of the particles in the coating layer is preferably in the range of 3 to 25% by weight, more preferably 5 to 15% by weight and still more preferably 5 to 10% by weight based on a total weight of the coating layer. When the content of the particles in the coating layer is less than 3% by weight, the effect of preventing occurrence of blocking tends to be insufficient. On the other hand, when the content of the fine particles in the coating layer is more than 25% by weight, although the effect of presenting occurrence of blocking becomes high, the resulting coating layer tends to be deteriorated in transparency as well as continuity, so that there tend to occur problems such as deteriorated coating film strength and poor easy-bonding property. By using the particles within the above-specified range, it is possible to satisfy both of a good easy-bonding property and a good anti-blocking property of the resulting film.

Examples of the particles used in the coating layer include inorganic particles such as silica, alumina and metal oxides, and organic particles such as crosslinked polymer particles. In particular, from the viewpoints of a good dispersibility in the coating layer and a good transparency of the resulting coating film, silica particles are preferably used.

When the particle diameter of the particles is too small, the effect of preventing occurrence of blocking tends to be hardly attained. When the particle diameter of the particles is too large, the particles tend to be fallen off from the resulting coating film. The average particle diameter of the particles used in the coating layer is preferably about 1/2 to about 10 times the thickness of the coating layer. Further, since the excessively large particle diameter of the particles tends to cause deterioration in transparency of the coating layer, the average particle diameter of the particles used in the coating layer is preferably not more than 300 nm and more preferably not more than 150 nm. The average particle diameter of the particles as used herein may be determined by measuring a 50% number-average particle diameter of the particles in a dispersion thereof using "MICROTRACK UPA" manufactured by Nikkiso Co., Ltd.

In the first coating layer according to the present invention, in order to improve surface properties of the coating layer and enhance a visibility when forming various layers such as a prism layer and a micro-lens layer on the surface of the coating layer as well as improve a transparency of the resulting film, a binder polymer other than the above urethane resin having a polycarbonate structure may be used in combination therewith.

The "binder polymer" used in the present invention is defined as a high-molecular compound having a number-average molecular weight (Mn) of not less than 1000 as measured by gel permeation chromatography (GPC) according to a flow scheme for evaluation of safety of high-molecular compounds (Council of Chemical Substances; November, 1985), and exhibiting a good film-forming property.

Specific examples of the binder polymer include polyester resins, acrylic resins, urethane resins, polyalkylene glycols, polyalkylene imines, methyl cellulose, hydroxy cellulose, starches, etc.

In the present invention, the content of the above urethane resin in the first coating layer is not particularly limited. This is because, although the first coating layer may be formed of the urethane resin as a main component, the first coating layer having an enhanced adhesion property can also be obtained merely by mixing a suitable amount of the urethane resin in a coating layer comprising the other easy-bonding resin as a main component. Therefore, the content of the urethane resin in the first coating layer may be appropriately selected according to the aimed properties thereof. However, when the content of the urethane resin in the first coating layer is too small, the effect by using the urethane resin tends to be hardly attained. Therefore, the lower limit of the content of the urethane resin in the first coating layer is usually in the range of not less than 20% by weight, preferably not less than 40% by weight and more preferably not less than 50% by weight based on a total weight of the first coating layer.

The second coating layer used in the film of the present invention is not particularly limited. The second coating layer is provided in order to enhance an adhesion property, in particular, to a layer formed by applying a solvent-containing resin. For example, a light diffusion layer, etc., may be formed on the second coating layer.

The acrylic resin contained in the second coating layer used in the film of the present invention is in the form of a polymer obtained from a polymerizable monomer having a carbon-to-carbon double bond such as, typically, an acrylic monomer and a methacrylic monomer. The polymer may be either a homopolymer or a copolymer. The polymer may also include a copolymer of the polymer and the other polymer (such as, for example, a polyester and a polyurethane). Examples of the copolymer include a block copolymer and a graft copolymer. In addition, the polymer may also include a polymer obtained by polymerizing the polymerizable monomer having a carbon-to-carbon double bond in a polyester solution or a polyester dispersion (which may also be in the form of a mixture of the polymers). Further, the polymer may also include a polymer obtained by polymerizing the polymerizable monomer having a carbon-to-carbon double bond in a polyurethane solution or a polyurethane dispersion (which may also be in the form of a mixture of the polymers). Similarly, the polymer may also include a polymer obtained by polymerizing the polymerizable monomer having a carbon-to-carbon double bond in the other polymer solution or the other polymer dispersion (which may also be in the form of a mixture of the polymers).

The above polymerizable monomer having a carbon-to-carbon double bond is not particularly limited. Examples of the typical compounds as the polymerizable monomer include various carboxyl group-containing monomers such as acrylic acid, methacrylic acid, crotonic acid, itaconic acid, fumaric acid, maleic acid and citraconic acid, and salts thereof; various hydroxyl group-containing monomers such as 2-hydroxyethyl (meth)acrylate, 2-hydroxypropyl (meth)acrylate, 4-hydroxybutyl (meth)acrylate, monobutylhydroxyl fumarate and monobutylhydroxyl itaconate; various (meth)acrylic acid esters such as methyl (meth)acrylate, ethyl (meth)acrylate, propyl (meth)acrylate, butyl (meth)acrylate and lauryl (meth)acrylate; various nitrogen-containing compounds such as (meth)acrylamide, diacetone acrylamide, N-methylol acrylamide and (meth)acrylonitrile; various styrene derivatives such as styrene, α-methyl styrene, divinyl benzene and vinyl toluene; various vinyl esters such as vinyl acetate and vinyl propionate; various silicon-containing polymerizable monomers such as γ-methacryloxypropyl trimethoxysilane and vinyl trimethoxysilane; various phosphorus-containing vinyl-based monomers; various halogenated vinyl-based monomers such as vinyl chloride, vinylidene chloride, vinyl fluoride, vinylidene fluoride, trifluorochloroethylene, tetrafluoroethylene, chlorotrifluoroethylene and hexafluoropropylene; and various conjugated dienes such as butadiene.

In order to enhance adhesion of the coating layer to various layers such as a light diffusion layer, there are preferably used acrylic resins having a functional group such as a hydroxyl group, an amino group and an amide group.

The urethane resin contained in the second coating layer used in the film of the present invention is a high-molecular compound having a urethane bond in a molecule thereof. As the urethane resin used in the second coating layer, there may be employed not only the urethane resins having a polycarbonate structure which are the same as used in the first coating layer, but also various other urethane resins. Examples of the polyol used for production of the urethane resins include, in addition to the polycarbonates, polyether polyols, polyester polyols, polyolefin polyols and acrylic polyols. These compounds may be used alone or in combination of any two or more thereof.

Examples of the polyether polyols include polyethylene glycol, polypropylene glycol, polyethylene/propylene glycol, polytetramethylene ether glycol and polyhexamethylene ether glycol.

Examples of the polyester polyols include those polyols produced by reacting a polycarboxylic acid (such as malonic acid, succinic acid, glutaric acid, adipic acid, pimelic acid, suberic acid, sebacic acid, fumaric acid, maleic acid, terephthalic acid and isophthalic acid) or an acid anhydride thereof with a polyhydric alcohol (such as ethylene glycol, diethylene glycol, triethylene glycol, propylene glycol, dipropylene glycol, tripropylene glycol, butanediol, 1,3-butanediol, 1,4-butanediol, 2,3-butanediol, 2-methyl-1,3-propanediol, 1,5-pentanediol, neopentyl glycol, 1,6-hexanediol, 3-methyl-1,5-pentanediol, 2-methyl-2,4-pentanediol, 2-methyl-2-propyl-1,3-propanediol, 1,8-octanediol, 2,2,4-trimethyl-1,3-pentanediol, 2-ethyl-1,3-hexanediol, 2,5-dimethyl-2,5-hexanediol, 1,9-nonanediol, 2-methyl-1,8-octanediol, 2-butyl-2-ethyl-1,3-propanediol, 2-butyl-2-hexyl-1,3-propanediol, cyclohexanediol, bishydroxymethylcyclohexane, dimethanol benzene, bishydroxyethoxybenzene, alkyl dialkanol amines and lactonediol).

In order to obtain the urethane resin to be contained in the second coating layer, these polyols may be used in combination with the isocyanate compound and the chain extender used for obtaining the above urethane resin having a polycarbonate structure. Also, in view of a suitability for the in-line coating, a water-dispersible or water-soluble urethane resin is preferably used. In order to impart a water dispersibility or a water solubility to the urethane resins, it is important that a hydrophilic group such as a hydroxyl group, a carboxyl group and an ether group is introduced into the urethane resin. Among these hydrophilic groups, from the viewpoints of a good coating property and a good adhesion property of the coating layer, preferred is a carboxyl group. In addition, when using the coating layer in the applications requiring a solvent resistance, no sulfonic group is preferably used in the urethane resin.

In the second coating layer used in the film of the present invention, in order to improve surface properties of the coating layer and enhance a transparency of the resulting film when forming various layers such as a light diffusion layer on the surface of the coating layer, a binder polymer other than the acrylic resin and the urethane resin may be used in combination therewith. When the coating layer is formed, for example, by using only a polyester resin as the binder without using any acrylic resin and urethane resin, an adhesion property of the coating layer to the light diffusion layer or the like may become insufficient in some cases. Therefore, in such a case, the acrylic resin or urethane resin is preferably used in combination with the polyester resin in such a range that the aimed effects of the present invention are not adversely affected.

Specific examples of the binder polymer include polyester resins, polyalkylene glycols, polyalkylene imines, methyl cellulose, hydroxy cellulose, starches, etc.

In the present invention, in the case where the second coating layer is required to have a good solvent resistance, the second coating layer preferably comprises no sulfonic acid-based polyester resin. The sulfonic acid-based polyester resin means a polyester resin comprising a sulfonic acid or a sulfonic acid salt in a molecule thereof. If any polyester resin is used in the coating layer, the polyester resin is preferably a carboxylic acid-based water-dispersible polyester resin. However, even in the case of the carboxylic acid-based polyester resin, when the content of the carboxylic acid-based polyester resin in the coating layer becomes large, the coating layer tends to be deteriorated in solvent resistance similarly to the case where the sulfonic acid-based polyester resin is used therein. Therefore, care should be taken in such a case.

The solvent resistance required for the second coating layer used in the present invention means the property capable of preventing occurrence of whitening of the film or deterioration of the respective layers formed therein when contacted with a solvent during a film processing step after forming a light diffusion layer or an anti-sticking layer on the second coating layer, or withstanding a solvent used for wiping off dusts or dirt attached on the surface of the coating layer. If the coating layer comprises the sulfonic acid-based polyester resin, the coating layer tends to be deteriorated in solvent resistance. The reason for the deteriorated solvent resistance is considered to be that the solvent is penetrated into sites where the sulfonic acid (or sulfonic acid salt) is present, and a large amount of the solvent is retained between the second coating layer and the layer formed thereon such as a light diffusion layer and an anti-sticking layer.

Further, a crosslinking agent may also be used in combination with the above components in the second coating layer unless the aimed effects of the present invention are adversely affected. By using the crosslinking agent in the second coating layer, the second coating layer can be strengthened in its structure and, as a result, tends to be enhanced in a wet heat resistance. As the crosslinking agent, there may be used various known resins. Examples of the resins used as the crosslinking agent include melamine compounds, epoxy compounds, oxazoline compounds, isocyanate compounds and carbodiimide compounds. Among these crosslinking agents, especially preferred are melamine compounds.

The melamine compound means a compound having a melamine skeleton therein. Examples of the melamine compound include alkylolated melamine derivatives, partially or completely etherified compounds obtained by reacting the alkylolated melamine derivative with an alcohol, and a mixture of these compounds. Examples of the alcohol suitably used for the above etherification of the alkylolated melamine derivative include methyl alcohol, ethyl alcohol, isopropyl alcohol, n-butanol and isobutanol. The melamine compound may be either a monomer or a dimer or higher polymer, or may be in the form of a mixture thereof. In addition, there may also be used those compounds obtained by co-condensing a urea or the like with a part of melamine. Further, a catalyst may also be used to enhance a reactivity of the melamine compound.

Examples of the epoxy compound include compounds having an epoxy group in a molecule thereof, and prepolymers and cured products of the compounds. Specific examples of the epoxy compound include condensates of epichlorohydrin and a polyhydric alcohol. Examples of the polyhydric alcohol include ethylene glycol, polyethylene glycol, glycerol, polyglycerol and bisphenol A. In particular, a reaction product of a low-molecular polyol and epichlorohydrin can provide an epoxy resin having an excellent water solubility.

Examples of the oxazoline compound include those compounds having an oxazoline ring in a molecule thereof such as monomers having an oxazoline ring and polymers synthesized by using the oxazoline compound as one of raw monomers thereof.

Examples of the isocyanate compound include those compounds having an isocyanate group in a molecule thereof. Specific examples of the isocyanate compound include hexamethylene diisocyanate, trimethylhexamethylene diisocyanate, cyclohexylene diisocyanate, xylylene diisocyanate, isophorone diisocyanate, naphthalene diisocyanate, tolylene diisocyanate, and blocked products or derivatives thereof.

These crosslinking agents may be used alone or in the form of a mixture of any two or more thereof. Further, in view of the application to in-line coating, the crosslinking agent preferably exhibits a water solubility or a water dispersibility.

In addition, for the purpose of improving an anti-blocking property and a slipping property of the coating layer, particles may be incorporated in the second coating layer. Examples of the particles include inorganic particles such as particles of silica, alumina and metal oxides, and organic particles such as crosslinked polymer particles.

Further, the first and second coating layers may also respectively comprise various additives such as a defoaming agent, a coatability improver, a thickening agent, an organic lubricant, an antistatic agent, an ultraviolet absorber, an antioxidant, a foaming agent and a dye, if required, unless the aimed effects of the present invention are adversely affected.

In the film of the present invention, the content of the acrylic resin in the second coating layer is preferably in the range of not less than 20% by weight, more preferably 30 to 95% by weight and still more preferably 50 to 95% by weight based on a total weight of the second coating layer. When the content of the acrylic resin in the second coating layer is less than 20% by weight, the resulting coating layer tends to be deteriorated in adhesion to a light diffusion layer or the like.

The content of the urethane resin in the second coating layer used in the present invention is preferably in the range of not less than 10% by weight, more preferably 20 to 95% by weight and still more preferably 30 to 95% by weight based on a total weight of the coating layer. When the content of the urethane resin in the second coating layer is less than 10% by weight, the resulting coating layer tends to be deteriorated in adhesion to a light diffusion layer.

The analysis of various components contained in the respective coating layers may be conducted, for example, by surface analysis such as TOF-SIMS.

When forming the respective coating layers by in-line coating, the laminated polyester film is preferably produced by the method in which an aqueous solution or a water dispersion comprising a series of the above mentioned compounds is prepared as a coating solution having a solid concentration of about 0.1 to about 50% by weight, and the thus prepared coating solution is applied onto the polyester film. The coating solution may also comprise a small amount of an organic solvent for the purpose of improving a dispersibility in water, a film-forming property, etc., unless the aimed effects and objects of the present invention are adversely affected. The organic solvent may be used alone, or two or more organic solvents may be appropriately used in the form of a mixture thereof.

In the laminated polyester film of the present invention, the film thickness of the respective coating layers formed on the polyester film is usually in the range of 0.002 to 1.0 g/m², preferably 0.005 to 0.5 g/m² and more preferably 0.01 to 0.2 g/m². When the film thickness of the respective coating layers is less than 0.002 g/m², the resulting coating layers may fail to exhibit a sufficient adhesion property. When the film thickness of the respective coating layers is more than 1.0 g/m², the resulting coating layers tend to be deteriorated in appearance and transparency, and the obtained laminated film tends to be deteriorated in anti-blocking property.

In the present invention, as the method of forming the respective coating layers, there may be used conventionally known coating methods such as a reverse gravure coating method, a direct gravure coating method, a roll coating method, a die coating method, a bar coating method and a curtain coating method which are described, for example, in Yuji HARAZAKI, "Coating Methods", Maki-shoten, 1979.

In the present invention, the drying and curing conditions used upon forming the respective coating layers on the polyester film are not particularly limited. For example, in the case where the respective coating layers are formed in an off-line coating manner, the coating layers may be subjected to heat treatment usually at a temperature of 80 to 200°C for 3 to 40 sec and preferably at a temperature of 100 to 180°C for 3 to 40 sec.

On the other hand, in the case where the respective coating layers are formed in an in-line coating manner, the coating layers may be subjected to heat treatment usually at a temperature of 70 to 280°C for 3 to 200 sec.

In any of the off-line coating method and the in-line coating method, the heat treatment may be used in combination with irradiation with active energy rays such as ultraviolet rays, if required. The polyester film constituting the laminated polyester film of the present invention may be previously subjected to surface treatments such as corona treatment and plasma treatment.

The first coating layer of the laminated polyester film according to the present invention is generally provided thereon with a prism layer or a micro-lens layer in order to improve a brightness of the film. In recent years, in order to efficiently enhance a brightness of films, there have been proposed prism layers of various shapes. In general, the prism layer has plural rows of prisms each having a triangular sectional shape which are arranged in parallel with each other. Also, there have been proposed micro-lens layers of various shapes. In general, the micro-lens layer has a structure in which a number of semispherical convex lenses are provided on a film. Both of the prism layer and the micro-lens layer may respectively have any conventionally known shapes.

The prism layer may have, for example, such a shape in which a thickness of the layer is 10 to 500 µm, a pitch between rows of prisms is 10 to 500 µm, and the respective prisms have a triangular sectional shape having an apex angle of 40° to 100°. As the material for the prism layer, there may be used conventionally known materials. Examples of the material for the prism layer include active energy ray-curable resins, more specifically, polyester resins, epoxy-based resins, and (meth)acrylate-based resins such as polyester (meth)acrylates, epoxy (meth)acrylates and urethane (meth)acrylates.

The micro-lens layer may have, for example, such a shape in which a thickness of the layer is 10 to 500 µm, and respective lenses have a semispherical shape having a diameter of 10 to 500 µm. The shape of each lens of the micro-lens layer may be a conical shape or a pyramidal shape. As the material for the micro-lens layer, conventionally known materials may be used therefor similarly to the prism layer. Examples of the material for the micro-lens layer include active energy ray-curable resins.

On the second coating layer of the laminated polyester film according to the present invention, there may be generally formed a light diffusion layer or the like. The light diffusion layer is used for uniformly diffusing light transmitted through the light diffusion layer in multiple directions, and required to have a high light diffusing property and a high light transmittance. The light diffusion layer may comprise particles and a binder.

As the particles incorporated in the light diffusion layer, there may be used those particles having properties capable of diffusing light therein. Examples of the particles include organic particles of acrylic resins, acrylic urethane resins, urethane resins, polyester resins, polyvinyl resins, etc., and inorganic particles of silica, metal oxides, barium sulfate, etc. Among these particles, acrylic resins and acrylic urethane resins are preferably used because of a good transparency thereof. The particle diameter of these particles is not particularly limited, and an average particle diameter thereof is usually 1 to 50 µm and preferably 5 to 15 µm.

The binder incorporated in the light diffusion layer is used for fixing the particles therein and allowing the light diffusion layer to exhibit a good light diffusion property. Examples of the binder include polyester resins, acrylic resins, polyurethane resins, fluororesins, silicone-based resins, epoxy resins and ultraviolet-curable resins. Also, in view of a good processability, polyol compounds can be suitably used as the binder. Examples of the polyol compounds include acrylic polyols and polyester polyols.

When the polyol compound is used as the binder, an isocyanate is suitably used as a curing agent. When incorporating the isocyanate into the binder, it is possible to form a strong crosslinked structure, resulting in improved properties of the light diffusion layer. In addition, when the ultraviolet-curable resin is used as the binder, the resin is preferably an acrylate-based resin, so that the resulting light diffusion layer can be enhanced in hardness thereof.

The light diffusion layer may also comprise various additives such as a surfactant, a microfine inorganic filler, a plasticizer, a curing agent, an antioxidant, an ultraviolet absorber and a rust preventive agent unless the light diffusion property inherent to the light diffusion layer is adversely affected.

The mixing ratio between the binder and the particles in the light diffusion layer may be appropriately determined according to the aimed light diffusion property of the light diffusion layer. For example, the weight ratio of the binder to the particles [binder/particles] is in the range of 0.1 to 50 and preferably 0.5 to 20 although not particularly limited thereto.

As the method of forming the light diffusion layer, there may be used the method in which a coating solution comprising the binder and the particles is prepared and then applied and dried. Examples of the coating method include conventionally known coating methods such as a reverse gravure coating method, a direct gravure coating method, a roll coating method, a die coating method, a bar coating method, a curtain coating method, a spray coating method and a spin coating method. The thickness of the light diffusion layer is not particularly limited, and is usually in the range of 1 to 100 µm and preferably 3 to 30 µm in view of a good light diffusion property and a high film strength of the resulting coating film, etc.

In the present invention, in addition to the light diffusion layer, an anti-sticking layer may also be formed instead on the second coating layer. The anti-sticking layer may comprise a binder and particles similarly to the light diffusion layer. The particles to be incorporated in the anti-sticking layer may generally have a smaller particle diameter and a less content as compared to those in the light diffusion layer because in the the anti-sticking layer, it is not required to attain a good light diffusion property by the particles. The anti-sticking layer may be formed in the same manner as the light diffusion layer. The thickness of the anti-sticking layer is not particularly limited, and is preferably in the range of 1 to 10 µm.

### EFFECT OF THE INVENTION

In the laminated polyester film according to the present invention, when a prism layer or the like is formed on one surface thereof and a light diffusion layer or the like is formed on the other surface thereof, the laminated polyester film can exhibit an excellent adhesion property to both of the layers. Therefore, the present invention has a high industrial value.

### PREFERRED EMBODIMENTS FOR CARRYING OUT THE INVENTION

The present invention is described in more detail below by Examples. However, these Examples are only illustrative and not intended to limit the present invention thereto, and other changes or modifications are possible and involved within the scope of the present invention unless they depart from the subject matter of the present invention. In addition, the measuring and evaluating methods used in the present invention are as follows.

### (1) Measurement of intrinsic viscosity of polyester:

One gram of a polyester from which the other polymer components incompatible with the polyester and pigments were previously removed was accurately weighed, and mixed with and dissolved in 100 mL of a mixed solvent comprising phenol and tetrachloroethane at a weight ratio of 50:50, and a viscosity of the resulting solution was measured at 30°C.

### (2) Measurement of average particle diameter (d₅₀: µm):

Using a centrifugal precipitation type particle size distribution measuring apparatus "SA-CP3 Model" manufactured by Shimadzu Seisakusho Co., Ltd., the value of a particle size corresponding to a cumulative fraction of 50% in equivalent spherical distribution of the particles was measured as an average particle diameter of the particles.

### (3) Glass transition point (Tg):

A solution or a water dispersion of a urethane resin was dried in a petri dish formed of "Teflon (registered trademark)" so as to form a coating film having thickness of 500 µm after dried. The drying conditions were adjusted such that the solution or water dispersion was dried at room temperature for one week, and then further dried at 120°C for 10 min. The thus obtained coating film was cut into a width of 5 mm, and set to a dynamic viscoelastic analyzer "DVA-200 Model" manufactured by I.T. Keisoku Seigyo Co., Ltd., such that a distance between chucks was 20 mm, and while the temperature therein was raised from -100°C to 200°C at a rate of 10°C/min, the measurement of E" was conducted at a frequency of 10 Hz. The point at which E" reached a maximum value was determined as Tg.

### (4) Method for evaluation of adhesion property:

A coating solution for a light diffusion layer comprising 60 parts of an acrylic polyol ("ACRYDIC A-801" produced by DIC Corp.), 15 parts of a polyisocyanate ("TAKENATE D110N" produced by Mitsui Chemical Polyurethane Co., Ltd.), 25 parts of acrylic resin particles having an average particle diameter of 15 µm ("MBX-15" produced by Sekisui Plastics Co., Ltd.), 100 parts of toluene and 100 parts of methyl ethyl ketone was prepared, and applied on a surface of the second coating layer and heat-cured to form a light diffusion layer having a thickness of 15 g/m². Further, an active energy ray-curable resin composition comprising 50 parts by weight of phenoxyethyl acrylate, 50 parts by weight of bisphenol A-diepoxy acrylate and 1.5 parts by weight of 2-hydroxy-2-methyl-1-phenyl propan-1-one was poured into a mold for forming a prism layer in which plural rows of prism-shaped mold cavities each having an apex angle of 65° were arranged with a pitch of 50 µm in parallel with each other. Then, the laminated polyester film was overlapped on the active energy ray-curable resin composition in the mold such that the first coating layer of the laminated polyester film came into contact with the active energy ray-curable resin. The active energy ray-curable resin composition was uniformly spread using a roller, and then an ultraviolet ray was irradiated thereover using an ultraviolet irradiation device to cure the active energy ray-curable resin composition. Next, the resulting film was released from the mold to obtain a laminated film on which the prism layer was formed. The thus obtained laminated film had a layer structure of the prism layer/first coating layer/polyester film/second coating layer/light diffusion layer. Thereafter, the resulting film was allowed to stand in a thermo-hygrostat maintained under conditions of 60°C and 90% RH for 500 hr. Then, the prism layer (on the first coating layer) and the light diffusion layer (on the second coating layer) were respectively subjected to cross-cutting to form 100 (10 x 10) cross-cuts thereon. A 18 mm-wide tape ("Cellotape (registered trademark) CT-18" produced by Nichiban Co., Ltd.) was attached onto the respective layers, and then rapidly peeled off therefrom at a peel angle of 180°. Then, the surface of the respective layers from which the tape was peeled off was observed to measure an area of the respective layers peeled. The evaluation ratings are as follows.
⊚: Peeled area of the respective layers was 0%.
○: Peeled area of the respective layers was more than 0% and not more than 5%.
Δ: Peeled area of the respective layers was more than 5% and not more than 20%.
×: Peeled area of the respective layers was more than 20%.

### (5) Method for evaluation of solvent resistance:

A coating solution for a light diffusion layer comprising 60 parts of an acrylic polyol ("ACRYDIC A-801" produced by DIC Corp.), 15 parts of a polyisocyanate ("TAKENATE D110N" produced by Mitsui Chemical Polyurethane Co., Ltd.), 25 parts of acrylic resin particles having an average particle diameter of 15 µm ("MBX-15" produced by Sekisui Plastics Co., Ltd.), 100 parts of toluene and 100 parts of methyl ethyl ketone was prepared, and applied on a surface of the second coating layer and heat-cured to form a light diffusion layer having a thickness of 15 g/m². Thereafter, the resulting laminated film was immersed in a mixed solvent comprising methyl ethyl ketone and isopropyl alcohol at a mixing ratio of 1:1 to visually observe a change in surface condition of the film and thereby evaluate a solvent resistance thereof. The evaluation ratings are as follows.
⊚: Area of whitening or unevenness was 0%.
○: Area of whitening or unevenness was more than 0% and not more than 20%.
Δ: Area of whitening or unevenness was more than 20% and not more than 50%.
×: Area of whitening or unevenness was more than 50%.

In the above ratings, the film was regarded as being acceptable upon practical use when the area of whitening or unevenness therein was not more than 20%.

The polyesters used in the respective Examples and Comparative Examples were prepared by the following methods.

### <Method for producing polyester (A)>

One hundred parts by weight of dimethyl terephthalate and 60 parts by weight of ethylene glycol as starting materials were charged together with tetrabutoxytitanate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated, and then the resulting product was subjected to polycondensation reaction for 4 hr.

More specifically, the reaction temperature was gradually raised from 230°C until reaching 280°C. On the other hand, the reaction pressure was gradually reduced from normal pressures until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.63 on the basis of the change in agitation power in the reaction vessel. The resulting polymer was discharged under application of a nitrogen pressure from the reaction vessel, thereby obtaining a polyester (A) having an intrinsic viscosity of 0.63.

### <Method for producing polyester (B)>

One hundred parts by weight of dimethyl terephthalate and 60 parts by weight of ethylene glycol as starting materials were charged together with magnesium acetate tetrahydrate as a catalyst into a reaction vessel, and the reaction therebetween was initiated at 150°C. The reaction temperature was gradually raised while distilling off methanol as produced, and allowed to reach 230°C after 3 hr. After 4 hr, the transesterification reaction was substantially terminated. The obtained reaction mixture was transferred to a polycondensation reaction vessel, and mixed with orthophosphoric acid and then with germanium dioxide, followed by subjecting the resulting mixture to polycondensation reaction for 4 hr. More specifically, the reaction temperature was gradually raised from 230°C until reaching 280°C. On the other hand, the reaction pressure was gradually reduced from normal pressure until finally reaching 0.3 mmHg. After initiation of the reaction, the change in agitation power in the reaction vessel was monitored, and the reaction was terminated at the time at which a viscosity of the reaction solution reached the value corresponding to an intrinsic viscosity of 0.65 on the basis of the change in agitation power in the reaction vessel. The resulting polymer was discharged under application of a nitrogen pressure from the reaction vessel, thereby obtaining a polyester (B) having an intrinsic viscosity of 0.65.

### <Method for producing polyester (C)>

The same procedure as defined in the above method for producing the polyester (A) was conducted except that silica particles having an average particle diameter of 2.0 µm in the form of a dispersion in ethylene glycol were added in an amount of 0.2 part, and the polycondensation reaction was terminated at the time at which a viscosity of the reaction solution reached the value corresponding to an intrinsic viscosity of 0.66, thereby obtaining a polyester (C) having an intrinsic viscosity of 0.66.

The compounds constituting the coating layer are as follows.

### • Urethane resin having a polycarbonate structure: (IA)

Water dispersion of a urethane resin having Tg of -30°C which was obtained by neutralizing a prepolymer produced from 400 parts of a polycarbonate polyol having a number-average molecular weight of 2000 which was obtained from 1,6-hexanediol and diethyl carbonate, 10.4 parts of neopentyl glycol, 58.4 parts of isophorone diisocyanate and 74.3 parts of dimethylol butanoic acid with triethylamine, and then subjecting the neutralized product to chain extension reaction using isophorone diamines

### • Urethane resin having a polycarbonate structure: (IB)

Water-dispersible type polycarbonate polyurethane resin "RU-40-350" comprising a carboxyl group and having Tg of-20°C (produced by Stahl Inc.)

### • Urethane resin having a polycarbonate structure: (IC)

Carboxylic acid water-dispersible type vinyl group-containing polycarbonate polyurethane resin "SPX-039" having Tg of 3°C (produced by ADEKA Corp.)

### • Urethane resin: (ID)

Carboxylic acid water-dispersible type polyester polyurethane resin "HYDRAN AP-40" (produced by DIC Corp.)

### • Urethane resin: (IE)

Aliphatic polyester polyurethane resin "NEORESIN R-960" (produced by DSM NeoResins Corp.)

### • Acrylic resin: (IIA) Water dispersion of acrylic resin obtained by polymerizing the following composition

Emulsion polymer (emulsifier: anionic surfactant) produced from ethyl acrylate/n-butyl acrylate/methyl methacrylate/N-methylol acrylamide/acrylic acid = 65/21/10/2/2 (% by weight)

### Acrylic resin: (IIB) Water dispersion of acrylic resin obtained by polymerizing the following composition

Emulsion polymer (emulsifier: anionic surfactant) produced from ethyl acrylate/methyl methacrylate/2-hydroxyethyl methacrylate/N-methylol acrylamide/acrylic acid = 65/28/3/2/2 (% by weight)

### • Polyester resin: (IIIA) Water dispersion of polyester resin obtained by polymerizing the following composition

Monomer composition: (acid component) terephthalic acid/isophthalic acid/5-sodium sulfoisophthalic acid//(diol component) ethylene glycol/1,4-butanediol/diethylene glycol = 56/40/4//70/20/10 (mol%)

### • Polyester resin: (IIIB)

Carboxylic acid-based polyester resin "POLYESTAR-WR-961" (produced by Nippon Synthetic Chemical Industry, Co., Ltd.)

### • oxazoline compound: (IVA)

Polymer-type crosslinking agent "EPOCROSS WS-500" (produced by Nippon Shokubai Co., Ltd.) in which an oxazoline group is bonded as a branched chain to an acrylic resin

### • Epoxy compound: (IVB)

Polyglycerol polyglycidyl ether "DECONAL EX-521" (produced by Nagase Chemtex Co., Ltd.

### • Melamine compound: (IVC)

Hexamethoxymethyl melamine

### • Particles: (V)

Silica sol having an average particle diameter of 65 nm

### Example 1:

A mixed raw material obtained by mixing the polyesters (A), (B) and (C) in amounts of 85%, 5% and 10%, respectively, as a raw material for outermost layers (surface layers), and a mixed raw material obtained by mixing the polyesters (A) and (B) in amounts of 95% and 5%, respectively, as a raw material for an intermediate layer, were respectively charged into two extruders, melted therein at 290°C, and then co-extruded therefrom on a cooling roll whose surface was controlled to a temperature of 40°C to form a sheet having a two-kind/three-layer structure (surface layer/intermediate layer/surface layer), followed by cooling and solidifying the thus extruded sheet on the cooling roll, thereby obtaining an unstretched sheet. Next, the thus obtained unstretched sheet was stretched utilizing a difference between peripheral speeds of rolls at 85°C and a stretch ratio of 3.4 times in a longitudinal direction thereof. Thereafter, a coating solution A1 shown in the below-mentioned Table 1 was applied on one surface of the thus obtained longitudinally stretched sheet, and a coating solution B1 shown in Table 1 was applied on the other surface of the stretched sheet. Then, the resulting coated sheet was introduced into a tenter where the sheet was stretched at 120°C and a stretch ratio of 4.0 times in a lateral direction thereof and then heat-treated at 225°C. Next, the obtained stretched sheet was relaxed by 2% in a lateral direction thereof, thereby obtaining a polyester film having a thickness of 188 µm (each surface layer: 9 µm; intermediate layer: 170 µm) which was provided on both the surfaces thereof with respective coating layers each having a coating amount (after dried) as shown in Table 2.

As a result of evaluating an adhesion property of the thus obtained polyester film, it was confirmed that a good adhesion property was attained on both sides of the first coating layer and the second coating layer. The properties of the polyester film are shown in Table 2 below.

### Examples 2 to 18:

The same procedure as defined in Example 1 was conducted except that the coating agent composition was changed to those compositions as shown in Table 1, thereby obtaining polyester films. The properties of the thus obtained polyester films are shown in Table 2. As a result, it was confirmed that a good adhesion property was attained on both sides of the first coating layer and the second coating layer in the respective polyester films.

### Comparative Examples 1 to 4:

The same procedure as defined in Example 1 was conducted except that the coating agent composition was changed to those compositions as shown in Table 1, thereby obtaining polyester films. The evaluation results of the thus obtained laminated polyester films are as shown in Table 2, namely, it was confirmed that the coating layers in the respective laminated polyester films had a poor adhesion property.

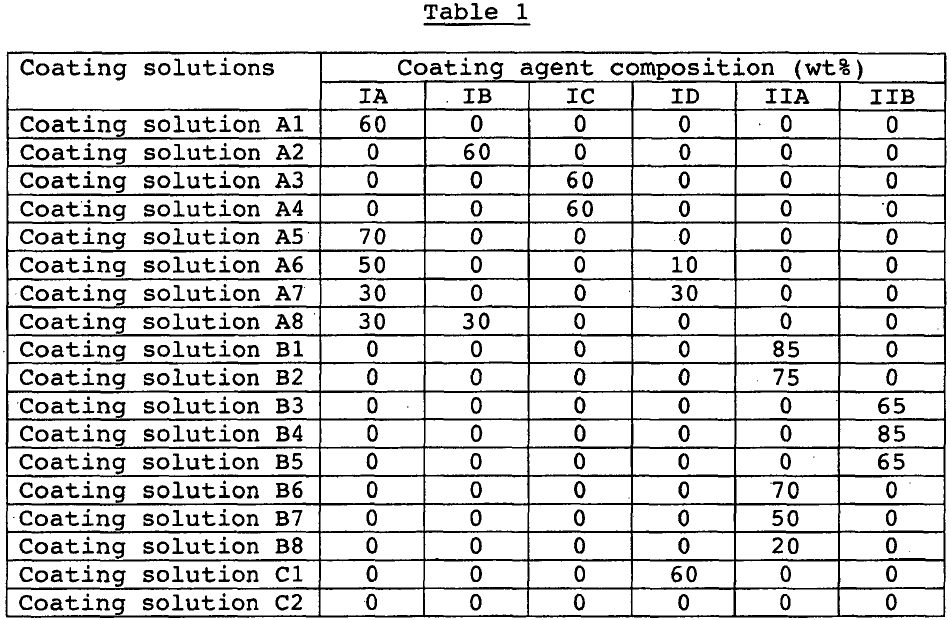

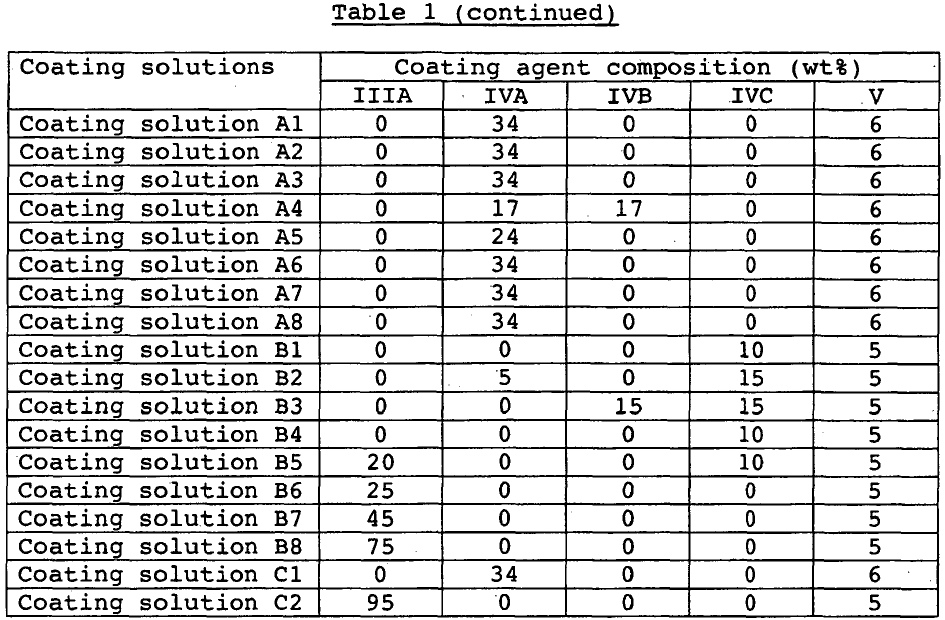

Meanwhile, each of the above coating solutions was used in the form of an aqueous solution having a concentration of 3% by weight except that the coating solution for the second coating layer in Example 5 was used in the form of an aqueous solution having a concentration of 10% by weight.

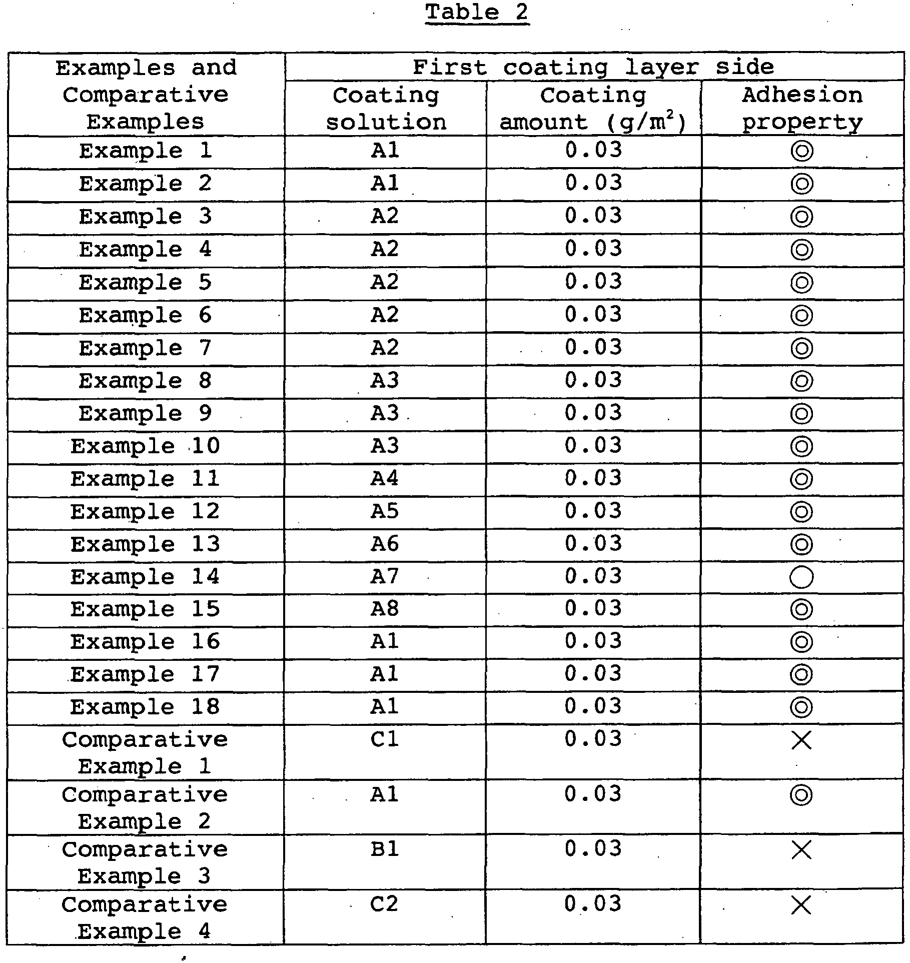

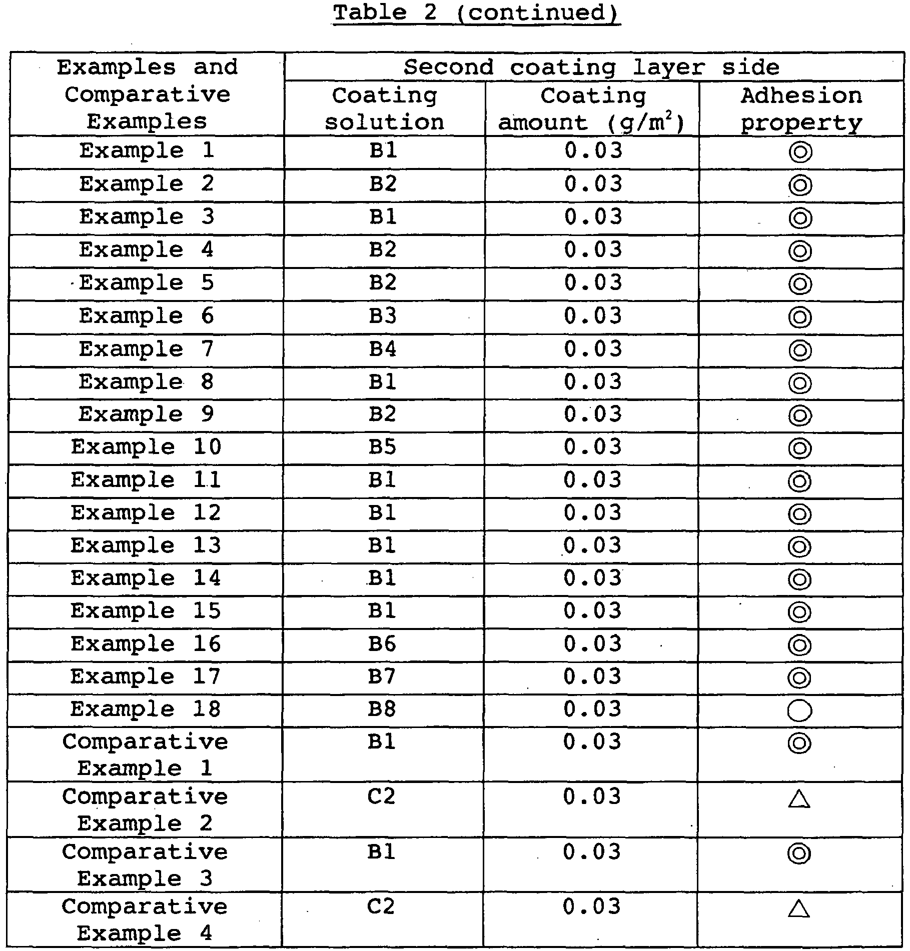

### Examples 19 to 38:

The same procedure as defined in Example 1 was conducted except that the coating agent composition was changed to those compositions as shown in Tables 1 and 3, thereby obtaining polyester films. The properties of the thus obtained polyester films are shown in Table 4. As a result, it was confirmed that a good adhesion property was attained on both sides of the first coating layer and the second coating layer in the respective polyester films.

### Comparative Example 5:

The same procedure as defined in Example 1 was conducted except that the coating agent composition was changed to the composition as shown in Table 3, thereby obtaining a polyester film. The evaluation results of the thus obtained laminated polyester film are as shown in Table 4, namely, it was confirmed that the coating layers in the polyester film had a poor adhesion property.

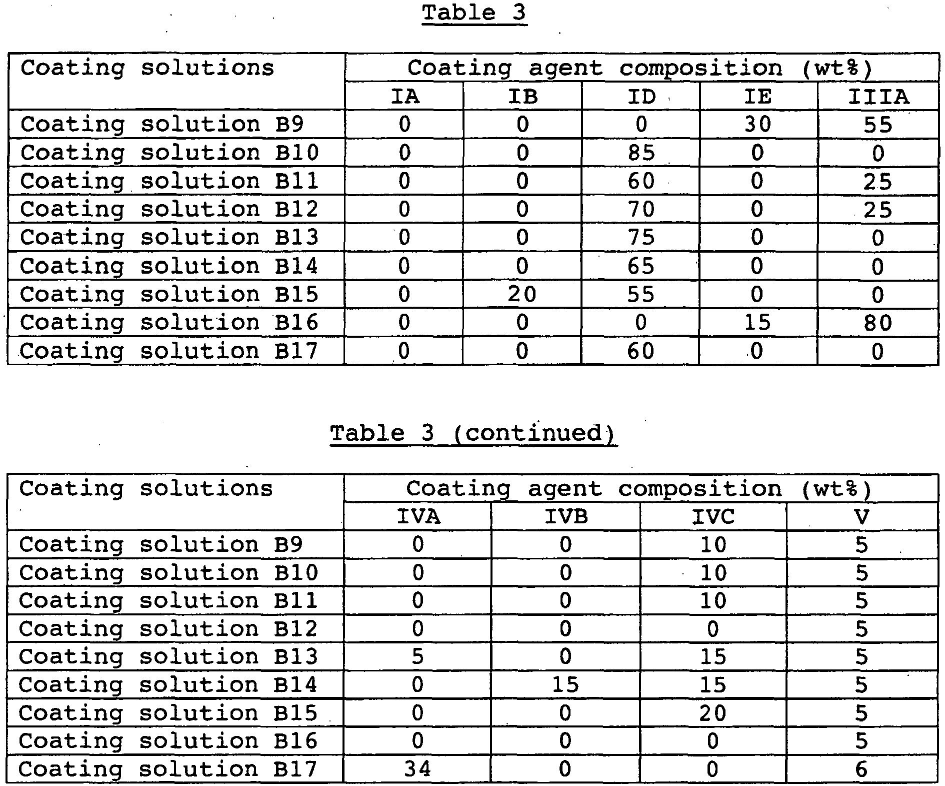

Meanwhile, each of the above coating solutions was used in the form of an aqueous solution having a concentration of 3% by weight except that the coating solution for the second coating layer in Example 24 was used in the form of an aqueous solution having a concentration of 10% by weight.

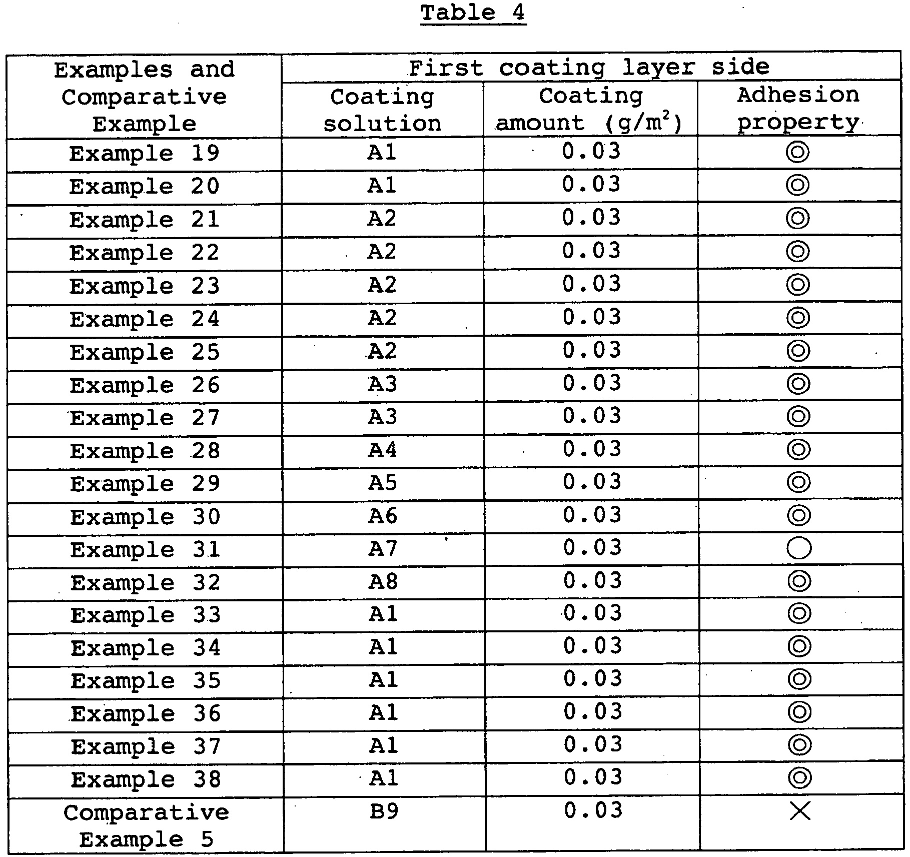

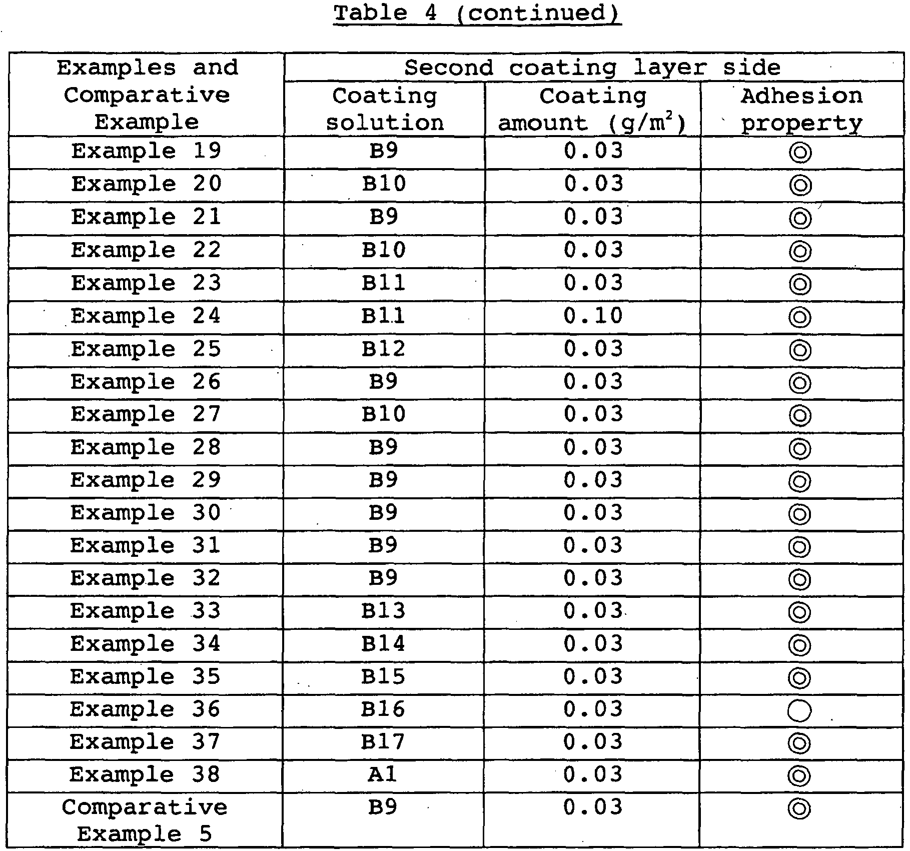

### Examples 39 to 57:

The same procedure as defined in Example 1 was conducted except that the coating agent composition was changed to those compositions as shown in Tables 1 and 5, thereby obtaining polyester films. The properties of the thus obtained polyester films are shown in Table 6. As a result, it was confirmed that a good adhesion property was attained on the first coating layer side in the respective polyester films, whereas a good adhesion property and a good solvent resistance were attained on the second coating layer side in the respective polyester films.

### Comparative Example 6:

The same procedure as defined in Example 1 was conducted except that the coating agent composition was changed to the composition as shown in Table 5, thereby obtaining a polyester film. The evaluation results of the thus obtained laminated polyester film are as shown in Table 6, namely, it was confirmed that the coating layers in the polyester film had a poor adhesion property and a poor solvent resistance, i.e., the adhesion property and solvent resistance of the coating layers were weak.

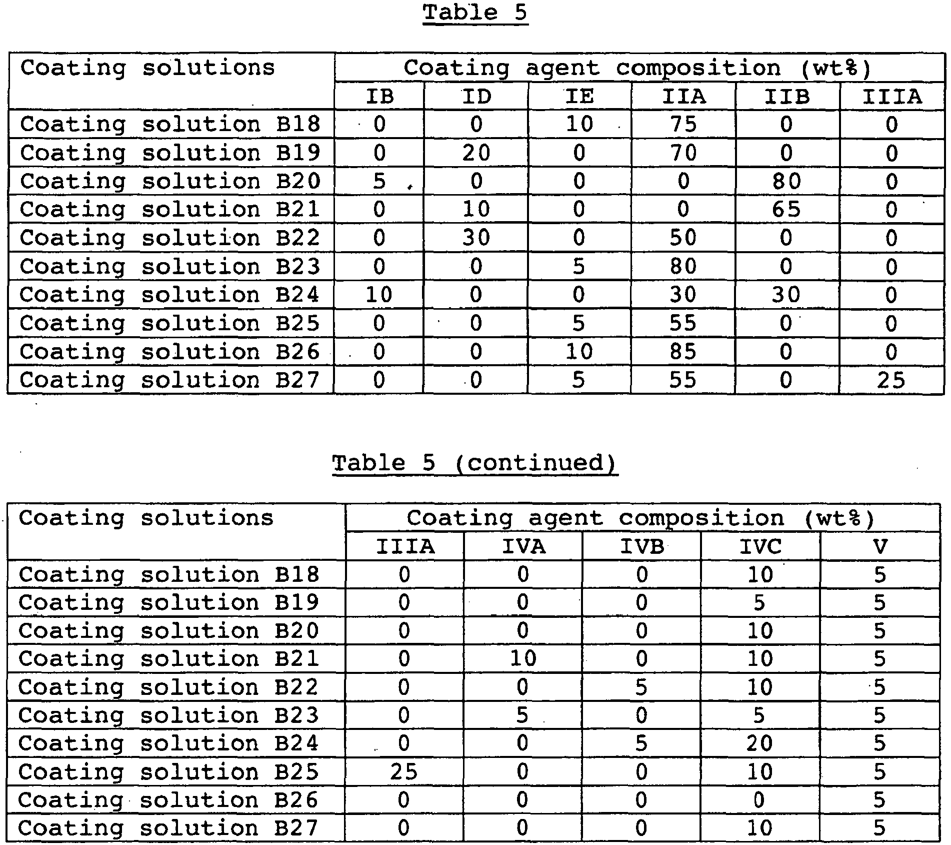

Meanwhile, each of the above coating solutions was used in the form of an aqueous solution having a concentration of 3% by weight except that the coating solution for the second coating layer in Example 44 was used in the form of an aqueous solution having a concentration of 10% by weight.

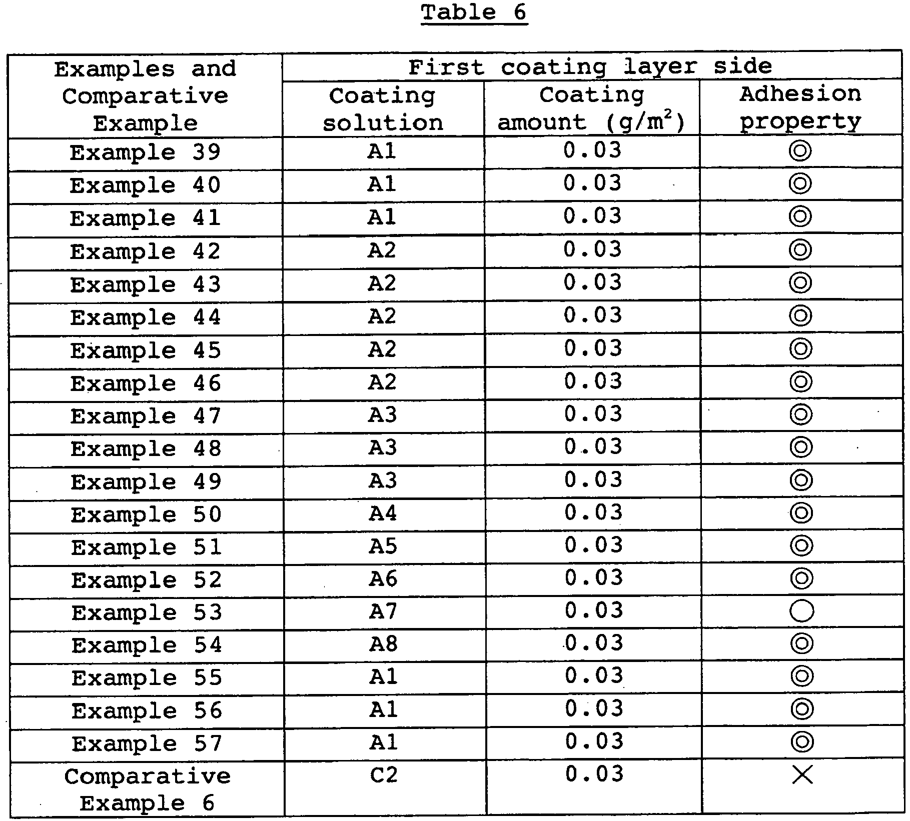

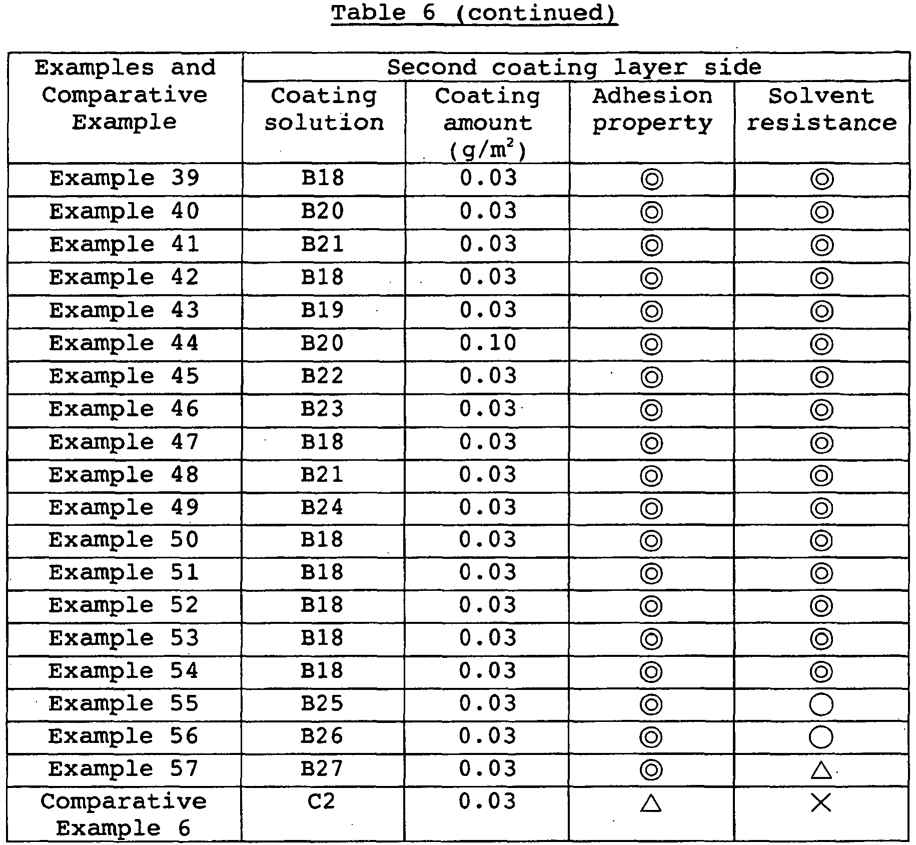

### INDUSTRIAL APPLICABILITY

The film of the present invention can be suitably used in the applications in which a good adhesion property to various functional layers is required, such as, for example, a backlight unit for liquid crystal displays.

## Claims

1. A laminated polyester film comprising a polyester film, a coating layer formed on one surface of the polyester film which comprises a urethane resin having a polycarbonate structure, and a coating layer formed on the other surface of the polyester film which comprises an acrylic resin or a urethane resin.

2. A laminated polyester film according to claim 1, wherein the coating layer comprising the urethane resin having a polycarbonate structure comprises a crosslinking agent.

3. A laminated polyester film according to claim 1 or 2, wherein the coating layer comprising the acrylic resin or the urethane resin comprises no sulfonic acid-based polyester resin.

## Patentansprüche

1. Laminierte Polyesterfolie, umfassend eine Polyesterfolie, eine auf einer Oberfläche der Polyesterfolie gebildete Überzugsschicht, die ein Urethanharz mit einer Polycarbonatstruktur umfasst, und eine auf der anderen Oberfläche der Polyesterfolie gebildete Überzugsschicht, die ein Acrylharz oder ein Urethanharz umfasst,

2. Laminierte Polyesterfolie nach Anspruch 1, wobei die das Urethanharz mit einer Polycarbonatstruktur umfassende Überzugsschicht ein Vernetzungsmittel umfasst.

3. Laminierte Polyesterfolie nach Anspruch 1 oder 2, wobei die das Acrylharz oder Urethanharz umfassende Überzugsschicht kein Polyesterharz auf Sulfonsäurebasis umfasst.

## Revendications

1. Film de polyester stratifié comprenant un film de polyester, une couche de revêtement formée sur une surface du film de polyester qui comprend une résine d'uréthane ayant une structure de polycarbonate, et une couche de revêtement formée sur l'autre surface du film de polyester qui comprend une résine acrylique ou une résine d'uréthane.

2. Film de polyester stratifié selon la revendication 1, dans lequel la couche de revêtement comprenant la résine d'uréthane ayant une structure de polycarbonate comprend un agent de réticulation.

3. Film de polyester stratifié selon la revendication 1 ou 2, dans lequel la couche de revêtement comprenant la résine acrylique ou la résine d'uréthane ne comprend pas de résine de polyester à base d'acide sulfonique.
